# EUROPÄISCHE PATENTSCHRIFT

(11) **EP 1 694 978 B1**
(45) Veröffentlichungstag und Bekanntmachung des Hinweises auf die Patenterteilung: **04.05.2011**
(21) Anmeldenummer: 04820425.9
(22) Anmeldetag: 09.12.2004
(51) Int. Cl.: F16D 55/02, F16D 65/18

(54) **SCHEIBENBREMSE, INSBESONDERE MIT ELEKTROMOTORICHE NACHSTELLVORRICHTUNG, UND VERFAHREN ZUR ANSTEUERUNG DERARTIGER SCHEIBENBREMSEN**
DISK BRAKE, ESPECIALLY WITH AN ELECTROMOTIVE ADJUSTING DEVICE, AND METHOD FOR CONTROLLING SAID TYPE OF DISK BRAKE
FREIN A DISQUE, EN PARTICULIER DISPOSITIF DE REGLAGE ELECTROMOTEUR, ET PROCEDE POUR COMMANDER DES FREINS A DISQUE DE CE TYPE

(30) Priorität: 09.12.2003 DE 10357374
(43) Veröffentlichungstag der Anmeldung: 30.08.2006
(73) Patentinhaber: KNORR-BREMSE Systeme für Nutzfahrzeuge GmbH, 80809 München (DE)
(72) Erfinder: BAUMGARTNER, Johann, 85368 Moosburg (DE); STÖHR, Markus, 80993 München (DE); LEINUNG, Andreas, 80995 München (DE); PAHLE, Wolfgang, 83707 Bad Wiesee (DE)
(74) Vertreter: Mattusch, Gundula
(86) Internationale Anmeldenummer: PCT/EP2004/014010
(87) Internationale Veröffentlichungsnummer: WO 2005/059393

(56) Entgegenhaltungen:
- DE-A1- 10 139 911
- GB-A- 1 293 728
- US-A- 3 771 625
- US-A- 3 831 719
- US-A1- 2003 006 104
- US-B1- 6 336 531

## Beschreibung

Die vorliegende Erfindung betrifft eine elektromechanisch oder pneumatisch betätigte Scheibenbremse nach dem Oberbegriff des Anspruchs 1.

Bei bekannten, vorzugsweise druckluftbetätigten Scheibenbremsen erfolgt eine Bremsung durch eine Betätigung der Zuspannvorrichtung, beispielsweise mittels einer Bewegung einer Kolbenstange eines pneumatisch arbeitenden Bremszylinders, durch die ein angeschlossener Bremsbelag gegen die Bremsscheibe gepresst wird. Je nach dem ob die Scheibenbremse als Festsattelbremse oder als Schiebe- oder Schwenksattelbremse ausgelegt ist (oder als Kombination aus diesen Bremsentypen), wird entweder die Bremsscheibe gegen den weiteren Bremsbelag auf der anderen Seite der Bremsscheibe und/oder dieser weitere Bremsbelag gegen die Bremsscheibe bewegt, insbesondere geschoben.

Bei festsattelbremsen, siehe z.B. die WO 02/14708, wird die axial bewegliche, jedoch drehmomentübertragend auf einer Radnabe oder einem anderen Bauteil gelagerte Bremsscheibe, durch axiale Verschiebung und unter Überwindung eines Lüftspiels gegen den weiteren, bevorzugt relativ zum Festsattel feststehenden Bremsbelag gedrückt.

Nach Beendigung des Bremsvorgangs erfolgt zumindest auf der der Zuspannvorrichtung abgewandten Seite oftmals kein definiertes Lösen des Bremsbelages von der Bremsscheibenreibfläche sondern die Bremsbeläge bleiben aufgrund der einwirkenden Reibkräfte, die sich aus einer Belaghalterung und gegebenenfalls dem Schiebewiderstand des Bremssattels ergeben, mit einer Restdruckkraft an der Bremsscheibe haften. Ein Lösen des Kontaktes zwischen Bremsscheibe und Bremsbelag erfolgt durch die im Fahrbetrieb üblicherweise auftretenden Erschütterungen oder infolge eines an sich unerwünschten, sogenannten Taumelschlages der Bremsscheibe.

Durch den weiteren Kontakt zwischen den Bremsbelägen und der Bremsscheibe nach dem Lösen der Zuspannvorrichtung ergibt sich ein zusätzlicher Verschleiß sowohl der Bremsscheibe als auch der Bremsbeläge, woraus eine verringerte Standzeit der Verschleißteile mit den entsprechenden Kostennachteilen hinsichtlich einer Ersatzteilbeschaffung und Montage bzw. Demontage resultiert.

Es kann auch sein, dass sich durch eine etwas längere Anlage der Bremsbeläge an der Bremsscheibe die Bremsentemperaturen etwas erhöhen, was sich ebenfalls nachteilig auf die Standzeit auswirken kann. Überdies kann der aufgrund der Reibung der entsprechenden Bauteile in ungebremster Stellung auftretende, erhöhte Fahrwiderstand zu einem gewissen zusätzlichen Kraftstoffverbrauch fuhren, was vermieden werden sollte.

Neben dem fehlenden Zwangslüften, also der sicheren Lösung der Bremsbeläge von der Bremsscheibe nach Beendigung des Bremsvorganges, besteht ein weiteres konstruktives Problem von Festsattelscheibenbremsen darin, dass die betriebsbedingt notwendige Mikrobeweglichkeit der Bremsscheibe und/oder des Bremssattels insbesondere bei starker Vibrationsbeanspruchung, wie sie beim Befahren von schlechten Straßen auftritt, zu einem starken Verschleiß vor allem an den Formschlußelementen führen: hierzu zählt insbesondere eine Keilverzahnung, mit der die axial verschiebbare Bremsscheibe verdrehsicher an einem Achsflansch oder einem vergleichbaren fahrzeugseitigen Bauteil gehalten wird.

Die auftretende, außerordentliche Beanspruchung der Formschlußteile erfordert ein verschleißbedingtes vorzeitiges Auswechseln der entsprechenden Bauteile mit den sich daraus ergebenden Kosten.

Eine gattungsgemäße Scheibenbremse offenbart die US3831719A, Der vorliegenden Erfindung liegt daher die Aufgabe zugrunde, eine Scheibenbremse der gattungsgemäßen Art so weiter zu entwickeln, daß mit konstruktiv einfachen Mitteln der Verschleiß der Bremsscheibe und der Bremsbacken minimiert, die Betriebssicherheit verbessert und die Standzeit insgesamt erhöht wird.

Diese Aufgabe wird durch eine Scheibenbremse mit den Merkmalen des Anspruchs 1 gelöst.

Danach ist der Anschlag vorgesehen, an dem die Bremsscheibe und/oder der Bremssattel unter elastischer Vorspannung im gelösten Zustand der Bremse anliegt. Hiermit wird auf einfache konstruktive Weise gewährleistet, dass beim Lösen der Zuspannvorrichtung, also beim Beenden des Bremsvorgangs, zwangsweise durch die elastische Kraft ein Freispiel zwischen den Bremsbacken bzw. deren Bremsbelägen und der Bremsscheibe erzeugt wird, so dass sich diese Bauteile sich nur während der einer Bremsung kontaktieren und danach wieder voneinander lösen. Dabei entspricht das Freispiel dem durch die Nachstellvorrichtung bestimmten Lüftspiel, also dem Abstand zwischen der Bremsscheibe und der Bremsbacke.

Vorzugsweise sind die elastischen Vorspannkräfte derart bemessen, dass diese beim Zuspannen der Scheibenbremse - also bei einer Bewegung der Bremsscheibe und/oder des Bremssattels - durch die Zuspannkräfte ohne weiteres überwunden werden, und die bewegliche Bremsscheibe und/oder der bewegliche Bremssattel bei Lüftspieleinstellvorgängen und/oder bei einer Fahrt in der Zeit zwischen Bremsungen und/oder Lüfftspielvorgängen in einer relativ zum fahrzeugseitigen Bauteil genügend feststehenden Position gehalten sind, so dass die Bremsbeläge nicht zu schleifen beginnen.

Derart werden Bremsungen nicht behindert und dennoch die bei Fahrten auftretenden Schleifeeffekte mit der Folge höheren Verschleißes und Kraftstoffverbrauchs minimiert und die Möglichkeit zur "intelligenten" Einstellung des Lüftspiels unter Einschluss "intelligenter" Lüftspielfunktion optimiert. Durch die Möglichkeit zur Minimierung des Kraftstoffverbrauches wird diese Scheibenbremse zwangsläufig in Zukunft die Bremse der Wahl sein, insbesondere in der zusätzlich raumsparenden Anordnung als Festsattelbremse mit intelligenter - da elektrisch angetriebener und elektronisch - beispielsweise über ein bremsenintegriertes Steuergerät oder ein "aufgerüstetes" EBS-Steuergerät - steuer- und regelbare Nachstellfunktion.

Die elastische Vorspannung des beweglichen Elementes - Bremssattel und/oder Bremsscheibe - am Anschlag am fahrzeugseitigen Bauteil ist insbesondere vorteilhaft, wenn die Nachstellvordchtungen elektromechanische Antriebe aufweisen und über eine Elektronik ansteuerbar sind. Vorzugsweise sind dabei sogar wenigstens eine oder mehrere der Nachstellvorrichtungen auf jeder Seite der Bremsscheibe angeordnet, so dass sich die Beweglichkeit der Bremsscheibe auf einen "Mikroverschiebeweg" - den bei der Zuspannung zu überbrückenden Weg - beschränken kann.

Nach einer Variante ist der Bremssattel relativ zu einem fahrzeugseitigen Bauteil wie einem Achsflansch oder dergleichen unbeweglich, insbesondere als Festsattel, ausgebildet. Hierbei bietet es sich insbesondere als konstruktiv einfach an, wenn die Bremsscheibe axial verschiebbar aber undrehbar auf dem fahrzeugseitigen Bauteil gelagert ist.

Konstruktiv ist es vorteilhaft, dass der Anschlag erfindungsgemäß am fahrzeugseitigen Bauteil ausgebildet und die elastische Vorspannung durch Druckelemente realisiert ist, die sich ebenfalls an dem fahrzeugseitigen Bauteil abstützen. Dabei kann jedes Druckelement aus einem an der Bremsscheibe anliegenden Kontaktstück und einer Druckfeder besteht.

Nach der Erfindung ist zudem vorgesehen, daß die axial verschiebbar gelagerte Bremsscheibe durch das federnd gehaltene Druckelement gegen den Anschlag drückbar ist.

Die Federkräfte werden vorzugsweise von Stahlfedern oder einem vergleichbaren Federwerkstoff aufgebracht, die in einer entsprechenden Aufnahme des Bremssattels, des Achsflansches oder dgl. einliegen und an denen sich das jeweilige Druckelement abstützt.

Die Federkräfte sind dabei so zu bemessen, daß die bei einem Antastvorgang bei einem Lüftspieleinstellvorgang in der Kraftangriffszone der Bremsscheibe auftretenden Kräfte von beispielsweise 1 - 2 kN sowie die im wesentlichen im Schwerpunkt der Bremsscheibe auftretenden axial wirkenden Massenkräfte von beispielsweise 2 - 4 kN keine bzw. lediglich eine vernachlässigbar geringe Axialbewegung der Bremsscheibe hervorrufen und bei einem Bremsvorgang diese der notwendigen Relativbeweglichkeit der Bremsscheibe entgegengerichteten Kräfte nur geringfügig anwachsen.

Die genannten im Schwerpunkt der Bremsscheibe auftretenden, axial wirkenden Massenkräfte, die als Vibrationsbeanspruchung auftreten und die zur Kompensation entsprechende, durch die federnden Druckelemente, aufzubringenden Haltekräfte bedingen einerseits und die um den Faktor 2 geringeren Anlegekräfte beim Antasten, die entsprechend geringere Haltekräfte der federnden Druckelemente erfordern, können dadurch in Einklang gebracht werden, daß bei der Verstellung der Bremsscheiben durch Verstell- bzw. Betätigungskolben der Bremse aufgrund des einseitigen Kraftangriffs an der Reibfläche der Bremsscheibe zunächst nur eine geringe Kippbewegung der Bremsscheibe ausgeführt wird, wobei lediglich eine Teilkraft der radial weiter innen liegenden federnden Druckelemente überwunden werden muß.

Da die Massenkräfte im wesentlichen im Schwerpunkt der Bremsscheibe angreifen, wirkt diesen Massenkräften die volle Anlegekraft der Druckelemente entgegen.

Durch eine geeignete Wahl der Position der Bremsbetätigungskolben sowie der Position der Druckelemente, die beide in gewissen Grenzen wählbar sind, kann das Verhältnis zwischen dem Betätigungswiderstand einerseits und den Haltekräften bei Vibrationseinwirkung ebenfalls in gewissen Grenzen frei gewählt werden.

Prinzipiell kann das Druckelement aus einer Druckfeder bestehen, die stirnseitig an der Bremsscheibe und/oder dem Bremssattel anliegt. Besonders vorteilhaft ist jedoch eine Ausbildung der Druckelemente in der Form, dass der Anlagebereich aus einem nicht federnden Kontaktstück besteht, so dass die Feder selbst nicht in direktem Kontakt mit der Bremsscheibe steht. Hierdurch werden die unter Umständen hohen Kontakttemperaturen, die ansonsten zu einer Reduzierung der Federspannkraft führen könnten, nicht auf die Feder selbst übertragen. Das Kontaktstück und die sich daran anschließende Feder können als ein einziges Bauteil ausgebildet sein, aber auch aus zwei zusammenwirkenden Bauteilen bestehen.

Es ist auch denkbar, dass der Bremssattel relativ zu einem fahrzeugseitigen Bauteil wie einem Achsflansch oder dergleichen beweglich, insbesondere als Schiebesattel, ausgebildet ist und dass sich der Bremssattel unter elastischer Vorspannung am Anschlag am fahrzeugseitigen Bauteil (Bremssattel) abstützt. Bei einer Ausführung der Scheibenbremse als Schiebe- oder Schwenksattelbremse mit feststehender Bremsscheibe und beweglichem Bremssattel, kann derart auch eine elastische "Rückstell- und Haltekraft" wirken, durch welche der Bremssattel gegen die bei der Lüftspieleinstellung wirkenden Kräfte in der Anschlagposition gehalten wird und die wiederum derart bemessen wird, dass beim Betätigen der Bremse der dann notwendigen Bewegung des Bremssattels nur ein geringern Widerstand entgegenstellt wird, der die Bremsung nicht behindert.

Die Federkraft, vorzugsweise resultierend aus einer Druckfeder, ist insbesondere so bemessen, dass bei einer Betätigung der Bremse die notwendige Relativbewegung zwischen der Bremsscheibe und dem Bremssattel ohne einen überhöhten Federwiderstand ermöglicht wird.

Andererseits soll die Federkraft so sein, dass bei einer undefinierten Position z. B. eines Schiebesattels durch im Betrieb, beispielsweise bei einer Kurvenfahrt, auftretende Massenkräfte ein einseitiges Schleifen der Bremse verhindert wird, d. h., die Federkraft muss ausreichend sein, um die auftretenden Massenkräfte aufnehmen zu können. Dies gilt gleichermaßen für die als Schiebescheibe fungierende Bremsscheibe einer Festsattelbremse.

Die vom federnden Druckelement aufgebrachte Anlegekraft soll auch so bemessen sein, dass die bei einer normalen Fahrt auftretenden Massenkräfte und -momente die Bremsscheibe und/oder den Bremssattel nicht dauerhaft aus der Anlegeposition fortbewegen können.

Diese Andruckkräfte des oder der federnden Druckelemente sollen andererseits so gering gehalten sein, dass bei Betätigung der Bremse nur ein geringstmöglicher Widerstand zu überwinden ist, da dieser ansonsten zu ungleichen Bremskräften an den beiden Seiten der Bremsscheibe und damit zu einem ungleichen Bremsbelagverschleiß führen kann.

Weitere vorteilhafte Ausbildungen der Erfindung werden nachfolgend anhand der beigefügten Zeichnungen beschrieben. Es zeigen:
- Fig. 1: eine Scheibenbremse in einer geschnittenen, schematischen Seitenan- sicht,
- Fig. 2a,b;3a,b: jeweils Einzelheiten verschiedener Ausführungsbeispiele, ebenfalls in schematischen Seitenansichten jeweils nebst einem zugehörigen Kraft- Wegdiagram.

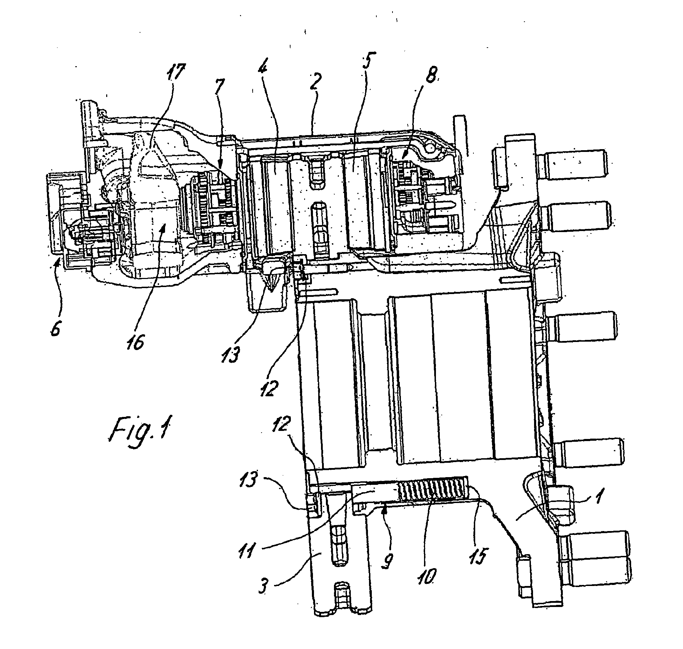

In der Figur 1 ist eine hier beispielhaft als Festsattelbremse ausgebildete Scheibenbremse für Nutzfahrzeuge dargestellt, die einen als Festsattel ausgebildeten Bremssattel 2 aufweist, der eine Bremsscheibe 3 übergreift, die axial verschiebbar und verdrehgesichert auf einem als Achsflansch 1 ausgebildeten Fahrzeugteil angeordnet ist. Der Festsattel 2 ist am Achsflansch 1 unbeweglich fixiert.

Im Festsattel 2 ist eine von einer Kolbenstange eines Bremszylinders betätigbare Zuspannvorrichtung 16 mit einem im Bremssattel exzentrisch gelagerten Drehhebel 17 angeordnet, die derart ausgelegt und konstruiert ist, dass bei einem Verschwenken des Drehhebels 17 Druckstücke (hier nicht detailliert zu erkennen) auf dieser Seite der Bremsscheibe 3 (Zuspannseite genannt) parallel zur Bremsscheibenachse verschoben werden, die eine zuspannseitig angeordnete Bremsbacke 4 gegen die Bremsscheibe 3 pressen, welche sich bei weiter fortschreitender Zuspannbewegung axial in Richtung der weiteren auf der anderen Seite der Bremsscheibe (Reaktionsseite) verschiebt, bis sie dort zur Anlage kommt und die eigentliche Bremswirkung zwischen der Bremsscheibe 3 und den Bremsbelägen 4, 5 einsetzt. Durch die reibende Anlage beider Bremsbacken 4, 5 werden die Bremsscheibe 3 und mit ihr die Radnabe 1 bzw. ein angeschlossenes, nicht dargestelltes Rad abgebremst. Zur Funktion einer beispielhaften Zuspannvorrichtung sei ergänzend auf die WO 02/14708 verwiesen.

Beiden Bremsbacken 4, 5 sind jeweils zuspannseitig und reaktionsseitig wenigstens eine, insbesondere je zwei, Nachstellvorrichtungen 7, 8 zugeordnet, mit der ein betriebsbedingter Verschleiß der Bremsbacken 4, 5 ausgleichbar ist, d. h., beispielsweise nach jedem oder mehreren Bremsvorgang(vorgängen) erfolgt eine Zustellung der Bremsbacken 4, 5 in Richtung der Bremsscheibe 3 um die Abriebdicke. Die Nachstellvorrichtungen sind elektromechanisch angetrieben, wobei hier auf jeder Seite der Bremsscheibe jeweils ein Elektromotor 6 vorgesehen ist, von denen hier der zuspannseitige Elektromotor 6 zu erkennen ist, der über eine Antriebsverbindung auf Drehspindeln oder dgl. einwirkt, welche bei einem Verdrehen die axiale Position der Druckstücke relativ zur Bremsscheibe 3 verändern. Der Vorteil dieser Nachstellvorgänge liegt unter anderem in der Möglichkeit zur Nutzung "intelligenter" Lüftspielfunktionen, die über ein bloßes Nachstellen der Bremse weit hinausgehen.

Um zu gewährleisten, daß die Bremsscheibe 3 nach Beendigung des Bremsvorganges in ihre Ausgangsposition zurückgeschoben wird, so daß zwischen der äußeren Bremsbacke 5 und der Bremsscheibe 3 ein ausreichendes Freispiel entsteht, sind erfindungsgemäß in Verschieberichtung der Bremsscheibe 3 federnde Druckelemente 9 vorgesehen, an denen die Bremsscheibe 3 anliegt.

Nach einer hier nicht zu erkennenden Variante sind mehrere in Umfangsrichtung gleichmäßig verteilte Druckelemente 9 vorgesehen, die vorzugsweise im Bereich des axial inneren Randes der Bremsscheibe 3 anliegen.

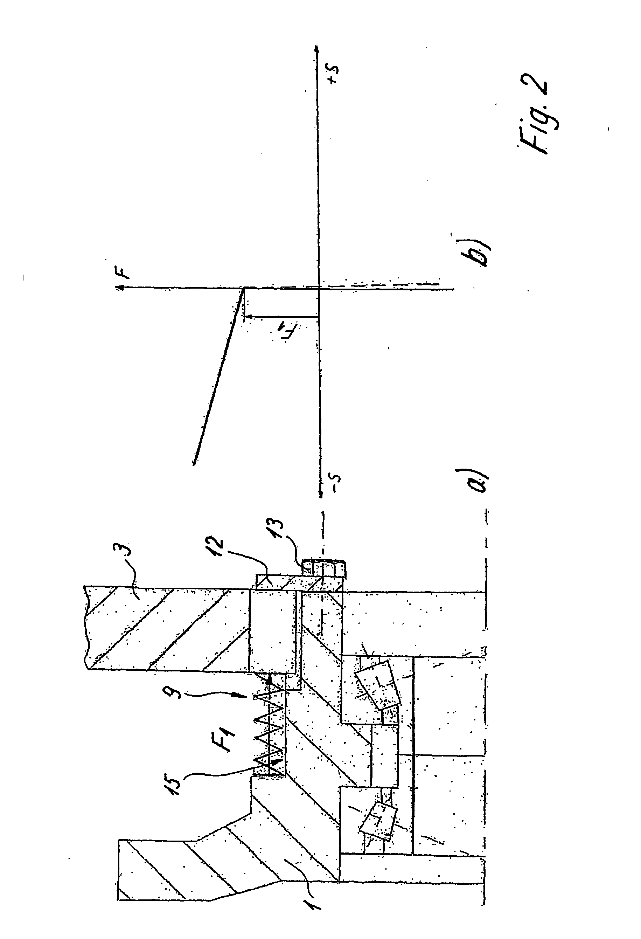

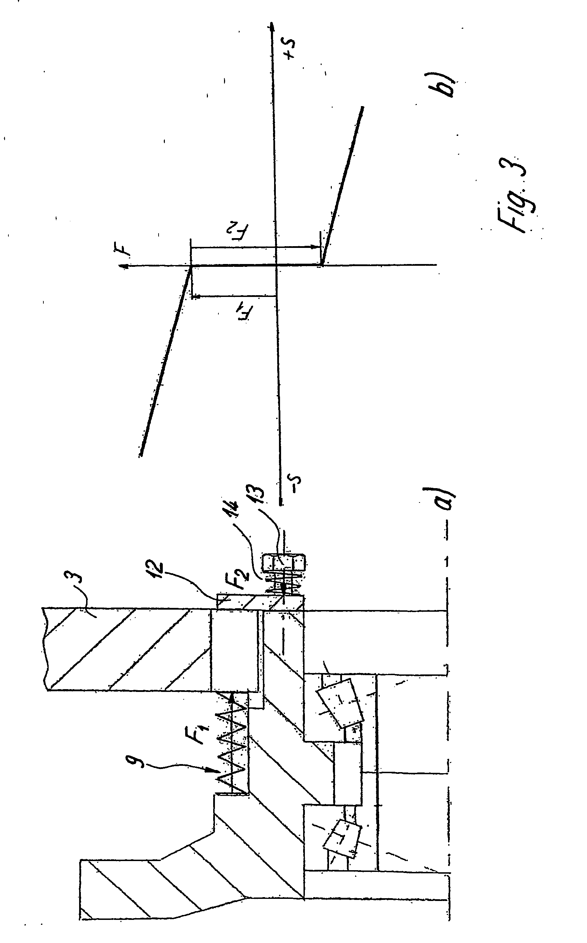

Die durch die Druckelemente 9 bedingte Verschiebung der Bremsscheibe 3 wird begrenzt durch Anschläge 12, die besonders deutlich in den Figuren 2 und 3 erkennbar sind.

Die feststehenden Anschläge 12 sind durch Schrauben 13 gehalten, die stirnseitig in den Achsflansch 1 eingedreht sind.

Nach Figur 1 ist das Druckelement 9 beispielhaft in kompakter Anordnung zweiteilig ausgebildet. Es umfasst ein Kontaktstück 11, das an der Bremsscheibe 3 anliegt und eine als Schraubenfeder ausgebildete Druckfeder 10 zur Erzeugung der elastischen Vorspannung zwischen dem Anschlag 12 und der Bremsscheibe 3. Alternativ ist auch eine andere Art der Ausgestaltung z.B. auf der Basis von Tellerfedern denkbar, die z.B. über eine Hülse wirken. Als Material wird z.B. ein Federstahl eingesetzt.

Durch die zweiteilige Ausbildung wird wirksam verhindert, daß beim Bremsen entstehende Reibwärme von der erwärmten Bremsscheibe 3 auf die Druckfeder 10 übertragen wird.

Die Druckelemente 9 sind jeweils in eine sich axial erstreckenden Ausnehmung 15 des Achsflansches 1 eingesetzt.

Der Anschlag 12 befindet sich dabei auf der Zuspannseite, so dass die Bremsscheibe von der Reaktionsseite her in Richtung der Zuspannseite nach einer Bremsung zurückgestellt wird.

In den Figuren 2 und 3 ist jeweils ein Teilausschnitt der Scheibenbremse im Anlagebereich eines Druckelementes 9 an der Bremsscheibe 3 dargestellt.

Während in der Figur 2 der den Rückschiebweg der Bremsscheibe 3 begrenzende Anschlag 12 fest positioniert ist (nicht gemäß der Erfindung), ist er bei dem Erfindungsgemäßen Ausführungsbeispiel in Figur 3 in Verschieberichtung der Bremsscheibe 3 federnd angeordnet, wozu ein Druckelement 14 in Form einer Schraubenfeder (denkbar ist auch hier z.B. eine Tellerfeder oder eine sonstige Feder) vorgesehen ist, die sich einerseits am Kopf der Schraube 13 und andererseits am Anschlag 12 abstützt.

Durch eine entsprechende Dimensionierung der Federkräfte der Druckelemente 9, 14 ist eine axiale Lagerung der Bremsscheibe gegeben, welche bei extremen Kurvenfahrten und den dabei auftretenden außergewöhnlichen Verformungen der Achsenbauteile ein Verschieben der Bremsscheibe über die Anschlagsposition hinaus zulässt. Zur vollen Funktionsfähigkeit muss selbstverständlich die Federkraft des Druckelementes 14 größer sein als die des Druckelementes 9, das eine Gegenkraft bildet. Derart wird jeder Anschlag durch das weitere federndes Druckelement 14 an das fahrzeugseitige Bauteil angedrückt, wobei die Kraft des Druckelementes zu der des anderen Druckelementes 9 größer und entgegengesetzt gerichtet ist (siehe jeweils Fig. 2b und 3b).

Im übrigen wird durch den Einsatz der beiden Druckelemente 9, 14 erreicht, daß die Bremsscheibe 3 auch bei betriebsbedingten erheblichen Erschütterungen in ihrer Position gehalten wird.

### Bezugszeichenliste

- 1.: Achsflansch
- 2.: Bremssattel
- 3.: Bremsscheibe
- 4.: Bremsbacke
- 5.: Bremsbacke
- 6.: Zuspannvorrichtung
- 7.: Nachstellvorrichtung
- 8.: Nachstellvorrichtung
- 9.: Druckelement
- 10.: Druckfeder
- 11.: Kontaktstück
- 12.: Anschlag
- 13.: Schraube
- 14.: Druckelement
- 15.: Ausnehmung
- 16.: Zuspannvorrichtung
- 17.: Drehhebel

## Patentansprüche

1. Elektromechanisch oder pneumatisch betätigte Scheibenbremse, insbesondere für ein Nutzfahrzeug,
- mit einem Bremssattel (2) und einer Bremsscheibe (3), welche der Bremssattel (2) zumindest abschnittsweise an ihrem äußeren Umfang übergreift,
einer ganz oder teilweise in den Bremssattel (2) eingesetzten Zuspannvorrichtung (6) zur Realisierung einer Zuspannbewegung zwischen den Bremsbelägen und der Bremsscheibe (3),
wenigstens einer, vorzugsweise mehreren Nachstellvorrichtung(en) (7, 8), zum Einstellen des Lüftspiels zwischen den Bremsbacke (4, 5) und der Bremsscheibe (3),
- wobei die Bremsscheibe (3) und der Bremssattel (2) relativ zueinander dadurch beweglich sind, dass entweder die Bremsscheibe (3) und/oder der Bremssattel (2) an einem fahrzeugseitigen Bauteil wie einem Achsflansch (1) oder dergleichen beweglich angeordnet sind,
- mit einem Anschlag (12), an dem die Bremsscheibe und/oder der Bremssattel unter elastischer Vorspannung im gelösten Zustand der Bremse anliegen,
- **dadurch gekennzeichnet, dass** der Anschlag am fahrzeugseitigen Bauteil ausgebildet ist und dass die elastische Vorspannung durch Druckelemente (9) realisiert ist, die sich an dem fahrzeugseitigen Bauteil abstützen, wobei jedes Druckelement (9) aus einem an der Bremsscheibe (3) anliegenden Kontaktstück (11) und einer Druckfeder (10) besteht, und
wobei jeder Anschlag (12) durch ein weiteres federndes Druckelement (14) an das fahrzeugseitige Bauteil angedrückt wird, wobei die Kraft des Druckelementes (14) zu der des ersten Druckelementes (9) größer und entgegengesetzt gerichtet ist.

2. Scheibenbremse nach Anspruch 1, **dadurch gekennzeichnet, dass** die elastische Vorspannung derart bemessen ist, dass
a. die wirkenden elastischen Vorspannkräfte beim Zuspannen der Scheibenbremse unter Bewegung der Bremsscheibe (3) und/oder des Bremssattels (2) durch die Zuspannkräfte ohne weiteres überwunden werden, und
b. die bewegliche Bremsscheibe (3) und/oder der bewegliche Bremssattel (2) bei Lüftspieleinstellvorgängen und/oder bei einer Fahrt in der Zeit zwischen Bremsungen und/oder Lüftspielvorgängen in einer relativ zum fahrzeugseitigen Bauteil feststehenden Position gehalten sind.

3. Scheibenbremse nach Anspruch 1 oder 2, **dadurch gekennzeichnet, dass** die elastische Vorspannung derart bemessen ist, dass die bewegliche Bremsscheibe (3) und/oder der bewegliche Bremssattel (2) bei Kurvenfahrten entgegen den auftretenden Massenkräften in einer relativ zum fahrzeugseitigen Bauteil feststehenden Position gehalten sind.

4. Scheibenbremse nach einem der vorstehenden Ansprüche, **dadurch gekennzeichnet, dass** der Bremssattel (2) relativ zum fahrzeugseitigen Bauteil unbeweglich, insbesondere als Festsattel, ausgebildet ist.

5. Scheibenbremse nach einem der vorstehenden Ansprüche, **dadurch gekennzeichnet, dass** die Nachstellvorrichtungen (7, 8) elektromechanische Antriebe aufweisen.

6. Scheibenbremse nach einem der vorstehenden Ansprüche, **dadurch gekennzeichnet, dass** wenigstens eine oder mehrere der Nachstellvorrichtungen (7, 8) auf jeder Seite der Bremsscheibe (3) angeordnet sind.

7. Scheibenbremse nach einem der vorstehenden Ansprüche, **dadurch gekennzeichnet, dass** die Bremsscheibe (3) axial verschiebbar aber undrehbar auf dem fahrzeugseitigen Bauteil gelagert ist.

8. Scheibenbremse nach einem der vorstehenden Ansprüche, **dadurch gekennzeichnet, dass** die Druckelemente (9) axial am radial inneren Bereich der Bremsscheibe (3) anliegen.

9. Scheibenbremse nach einem der vorhergehenden Ansprüche, **dadurch gekennzeichnet, dass** jedes Druckelement (9) ein- oder mehrteilig ausgebildet ist.

10. Scheibenbremse nach einem der vorhergehenden Ansprüche, **dadurch gekennzeichnet, dass** die Druckfeder (10) als Schraubenfeder ausgebildet ist.

11. Scheibenbremse nach einem der vorhergehenden Ansprüche, **dadurch gekennzeichnet, dass** die Druckfeder (10) als Tellerfeder ausgebildet ist.

12. Scheibenbremse nach einem der vorhergehenden Ansprüche, **dadurch gekennzeichnet, dass** die Bremsscheibe (3) durch die Druckelemente (9) auf der einen Seite der Bremsscheibe angeordnet sind und die Bremsscheibe gegen den Anschlag (12) auf der anderen Seite der Bremsscheibe drücken.

13. Scheibenbremse nach einem der vorhergehenden Ansprüche, **dadurch gekennzeichnet, dass** der Anschlag (12) auf der Zuspannseite der Bremsscheibe (3) und das Druckelement auf der Reaktionsseite der Bremsscheibe (3) angeordnet ist, so dass die Bremsscheibe von der Reaktionsseite her in Richtung der Zuspannseite nach einer Bremsung zurückgestellt wird.

14. Scheibenbremse nach einem der vorhergehenden Ansprüche, **dadurch gekennzeichnet, dass** das weitere Druckelement (14) als Schraubenfeder oder Tellerfeder ausgebildet ist.

15. Scheibenbremse nach einem der vorstehenden Ansprüche, **dadurch gekennzeichnet, dass** der Bremssattel (2) relativ zu einem fahrzeugseitigen Bauteil wie einem Achsflansch (1) oder dergleichen beweglich, insbesondere als Schiebesattel, ausgebildet ist und dass sich der Bremssattel unter elastischer Vorspannung am Anschlag am fahrzeugseitigen Bauteil (Bremssattel) abstützt.

## Claims

1. An electromechanically or pneumatically operated disc brake, in particular for a commercial vehicle,
- having a brake caliper (2) and a brake disc (3) which the brake caliper (2) engages over at least in sections at its outer circumference,
- an application device (6), which is completely or partially inserted into the brake caliper (2), for realising an application movement between the brake linings and the brake disc (3),
- at least one, preferably a plurality of adjusting device(s) (7, 8) for setting the air play between the brake shoes (4, 5) and the brake disc (3),
- the brake disc (3) and the brake caliper (2) being movable relative to one another in that either the brake disc (3) and/or the brake caliper (2) are arranged in a movable fashion on a vehicle-mounted component such as an axle flange (1) or the like,
- a stop (12), against which the brake disc and/or the brake caliper bear under elastic preload when the brakes are not applied, **characterised in that**
the stop (12) is formed at the vehicle-mounted component and that the elastic preload is realised by pressure elements, which are supported at the vehicle-mounted component, wherein each pressure element (9) consists of a contact piece (11) abutting the brake disc (3) and a pressure spring (10), and
wherein each stop (12) is pressed to the vehicle-mounted component by a further resilient pressure element (14), wherein the force of the pressure element (14) to that one of the first pressure element (9)ios larger and directed oppositely.

2. The disc brake as claimed in claim 1, **characterised in that** the elastic preload is dimensioned such that
a. the acting elastic preload forces are directly overcome by the application forces when the disc brake is applied by moving the brake disc (3) and/or the brake caliper (2), and
b. during air play setting operations and/or during driving in the period between braking operations and/or air play operations, the movable brake disc (3) and/or the movable brake caliper (2) are held in a position which is fixed relative to the vehicle-mounted component.

3. The disc brake as claimed in claim 1 or 2, **characterised in that** the elastic preload is dimensioned such that, during cornering, the movable brake disc (3) and/or the movable brake caliper (2) are held, counter to the occurring inertial forces, in a position which is fixed relative to the vehicle-mounted component.

4. The disc brake as claimed in one of the preceding claims, **characterised in that** the brake caliper (2) is embodied, in particular as a fixed caliper, such that it is immobile relative to the vehicle-mounted component.

5. The disc brake as claimed in one of the preceding claims, **characterised in that** the adjusting devices (7, 8) have electromechanical drives.

6. The disc brake as claimed in one of the preceding claims, **characterised in that** at least one or a plurality of adjusting devices (7, 8) are arranged on each side of the brake disc (3).

7. The disc brake as claimed in one of the preceding claims, **characterised in that** the brake disc (3) is mounted in an axially displaceable but nonrotatable manner on the vehicle-mounted component.

8. The disc brake as claimed in one of the preceding claims, **characterised in that** the pressure elements (9) bear axially against the radially inner region of the brake disc (3).

9. The disc brake as claimed in one of the preceding claims, **characterised in that** each pressure element (9) is of single-part or multi-part form.

10. The disc brake as claimed in one of the preceding claims, **characterised in that** the pressure spring (10) is embodied as a coil spring.

11. The disc brake as claimed in one of the preceding claims, **characterised in that** the pressure spring (10) is embodied as a plate spring.

12. The disc brake as claimed in one of the preceding claims, **characterised in that** the brake discs (3) by means of the pressure elements (9) are arranged on one side of the brake disc and press the brake disc against the stop (12) on the other side of the brake disc.

13. The disc brake as claimed in one of the preceding claims, **characterised in that** the stop (12) is arranged on the application side of the brake disc (3) and the pressure element is arranged on the reaction side of the brake disc (3), so that after a braking operation, the brake disc is reset from the reaction side in the direction of the application side.

14. The disc brake as claimed in one of the preceding claims, **characterised in that** the further pressure element (14) is embodied as a coil spring or plate spring.

15. The disc brake as claimed in one of the preceding claims, **characterised in that** the brake caliper (2) is embodied, in particular as a sliding caliper, such that it is movable relative to a vehicle-mounted component such as an axle flange (1) or the like, and **in that** the brake caliper rests, under elastic preload, on the stop on the vehicle-mounted component (brake caliper).

## Revendications

1. Frein à disque actionné électromagnétiquement ou pneumatiquement pour un véhicule utilitaire,
- comprenant un étrier (2) de frein et un disque (3) de frein, qui empiète sur l'étrier (2) de frein au moins par segment sur son pourtour extérieur,
- un dispositif (6) de serrage, inséré, en tout ou partie, dans l'étrier (2) de frein, pour la réalisation d'un mouvement de serrage entre les garnitures de frein et le disque (3) de frein,
- au moins un, de préférence plusieurs, dispositif(s) (7, 8) de rattrapage de jeu, pour régler le jeu d'air entre les mâchoires (4, 5) de frein et le disque (3) de frein,
- dans lequel le disque (3) de frein et l'étrier (2) de frein sont mobiles l'un par rapport à l'autre, par le fait que le disque (3) de frein et/ou l'étrier (2) de frein est monté mobile sur un élément constitutif côté véhicule, comme un flasque d'essieu ou analogue,
- comprenant une butée (12), sur laquelle le disque de frein et/ou l'étrier de frein s'applique sous précontrainte élastique lorsque le frein est desserré,
- **caractérisé en ce que** la butée est formée sur l'élément constitutif côté véhicule et **en ce que** la précontrainte élastique est réalisée par des éléments (9) d'application d'une pression, qui s'appuient sur l'élément côté véhicule, chaque élément (9) d'application d'une pression étant constitué d'une pièce (11) de contact s'appliquant au disque (3) de frein et d'un ressort (10) de compression, et
- dans lequel chaque butée (12) est appliquée par un autre élément (14) élastique d'application d'une pression sur l'élément constitutif côté véhicule, la force de l'élément d'application d'une pression étant supérieure à celle du premier élément (9) d'application d'une pression et dirigée en sens contraire.

2. Frein à disque suivant la revendication 1, **caractérisé en ce que** la précontrainte élastique est telle que
a. les forces élastiques de précontrainte agissantes sont, lorsque le frein à disque est serré avec déplacement du disque (3) de frein et/ou de l'étrier (2) de frein, surmontées sans difficulté par les forces de serrage,
b. le disque (3) de frein mobile et/ou l'étrier (2) de frein sont, lors d'opérations de réglage du jeu d'air et/ou lors d'un trajet, maintenus dans le temps entre des freinages et/ou des opérations de jeu d'air, dans une position fixe par rapport à l'élément constitutif côté véhicule.

3. Frein à disque suivant la revendication 1 ou 2, **caractérisé en ce que** la précontrainte élastique est telle que le disque (3) de frein mobile et/ou l'étrier (2) de frein mobile sont dans des virages, à l'encontre des forces d'inertie qui se produisent, dans une position fixe par rapport à l'élément constitutif côté véhicule.

4. Frein à disque suivant l'une des revendications précédentes, **caractérisé en ce que** l'étrier (2) de frein est constitué de manière à être immobile par rapport à l'élément constitutif côté véhicule, en étant notamment sous la forme d'un étrier fixe.

5. Frein à disque suivant l'une des revendications précédentes, **caractérisé en ce que** les dispositifs (7, 8) de rattrapage de jeu ont des entraînements électromécaniques.

6. Frein à disque suivant l'une des revendications précédentes, **caractérisé en ce qu'**au moins un ou plusieurs des dispositifs (7, 8) de rattrapage de jeu sont disposés de chaque côté du frein (3) à disque.

7. Frein à disque suivant l'une des revendications précédentes, **caractérisé en ce que** le disque (3) de frein est monté coulissant axialement, mais sans pouvoir tourner sur l'élément constitutif côté véhicule.

8. Frein à disque suivant l'une des revendications précédentes, **caractérisé en ce que** les éléments (9) appliquant une pression s'appliquent axialement sur la partie intérieure radialement du disque (3) de frein.

9. Frein à disque suivant l'une des revendications précédentes, **caractérisé en ce que** chaque élément (9) appliquant une pression est en une seule partie ou en plusieurs parties.

10. Frein à disque suivant l'une des revendications précédentes, **caractérisé en ce que** le ressort (10) de compression est constitué sous la forme d'un ressort hélicoïdal.

11. Frein à disque suivant l'une des revendications précédentes, **caractérisé en ce que** le ressort (10) appliquant une pression est constitué sous la forme d'un ressort à disque.

12. Frein à disque suivant l'une des revendications précédentes, **caractérisé en ce que** les éléments (9) d'application d'une pression sont disposés d'un côté du disque de frein et le disque de frein pousse sur la butée (12) de l'autre côté du disque de frein.

13. Frein à disque suivant l'une des revendications précédentes, **caractérisé en ce que** la butée (12) est disposée du côté de serrage du disque (3) de frein et l'élément d'application d'une pression est disposée du côté réaction du disque (3) de frein, de sorte que le disque de frein est rappelé à partir du côté réaction dans la direction du côté de serrage après un freinage.

14. Frein à disque suivant l'une des revendications précédentes, **caractérisé en ce que** l'autre élément (14) d'application d'une pression est constitué sous la forme d'un ressort hélicoïdal ou d'un ressort à disque.

15. Frein à disque suivant l'une des revendications précédentes, **caractérisé en ce que** l'étrier (2) de frein est mobile par rapport à un élément constitutif côté véhicule, comme un flasque (1) d'essieu ou analogue, en étant constitué notamment sous la forme d'un étrier coulissant, et **en ce que** l'étrier de frein s'appuie, avec précontrainte élastique sur la butée, sur l'élément constitutif côté véhicule (étrier de frein).
